# EUROPÄISCHE PATENTANMELDUNG

(11) **EP 0 791 645 A2**
(43) Veröffentlichungstag der Anmeldung: **27.08.1997**
(21) Anmeldenummer: 97102824.6
(22) Anmeldetag: 21.02.1997
(51) Int. Cl.: C10L 5/44

(54) **Brennmaterial für Grillvorrichtungen**

(30) Priorität: 21.02.1996 DE 19606400
(71) Anmelder: Amft, Karl Heinrich, 45966 Gladbeck (DE)
(72) Erfinder: Amft, Karl Heinrich, 45966 Gladbeck (DE)
(74) Vertreter: Spalthoff, Adolf, Dipl.-Ing.

(57) **Zusammenfassung**

Zur wenig aufwendigen und umweltfreundlichen Schaffung eines Brennmaterials für Grillvorrichtungen, in denen mittels glühenden Brennmaterials Speisen gegart werden, wird vorgeschlagen, daß das Brennmaterial Nußschalen enthält.

## Beschreibung

Die Erfindung bezieht sich auf ein Brennmaterial für Grillvorrichtungen, in denen mittels glühenden Brennmaterials Speisen gegart werden.

Bisher wird als Brennmaterial in derartigen Grillvorrichtungen vorwiegend Holzkohle eingesetzt. Die Herstellung dieser Holzkohle ist vergleichsweise aufwendig. Es ist erforderlich, zu diesem Zweck Bäume, Sträucher od. dgl. abzuholzen. Außerdem hat die hergestellte Holzkohle die Eigenschaft, daß sie stark verschmutzend wirkt.

Der Erfindung liegt die Aufgabe zugrunde, ein Brennmaterial für Grillvorrichtungen zur Verfügung zu stellen, welches besser handhabbar und darüber hinaus umweltfreundlicher ist.

Diese Aufgabe wird erfindungsgemäß dadurch gelöst, daß das Brennmaterial Nußschalen enthält. Bei solchen Nußschalen handelt es sich um ein Abfallprodukt, welches darüber hinaus als nachwachender Stoff in größeren Mengen zur Verfügung steht. Als besonders vorteilhaft für die Herstellung von Brennmaterial haben sich Kokosnußschalen erwiesen.

Hierbei ist es möglich, an den Kokosnußschalen anhaftendes Kokosbast oder Kokosfleisch mit zu verarbeiten.

Das vorstehend geschilderte, im wesentlichen aus Nußschalen bestehende Brennmaterial läßt sich in einfacher Weise herstellen, wenn die angefallenen Nußschalen zunächst zerkleinert werden. Danach können die Nußschalen, ggf. zusammen mit Kokosbast und -fleisch, gemahlen und dann mit Wasser getränkt, mit Luft durchblasen und verpreßt werden. Nach einer Trocknung wird der Stoff auf Maß geschnitten und dann verpackt. Durch das Durchblasen mit Luft wird das Brennmaterial in vorteilhafter Weise popcornähnlich aufgebläht, wodurch eine Volumenvergrößerung erfolgt, so daß bei der Verbrennung mehr 02 auftritt. Hierdurch wird der Glüheffekt verbessert und eine saubere Verbrennung gewährleistet. Außerdem ergibt sich aufgrund der Volumenvergrößerung eine erwünschte Verringerung des spezifischen Gewichts.

Das erfindungsgemäße Brennmaterial ist zu Briketts formbar.

Grundsätzlich ist es auch möglich, mit dem erfindungsgemäß im Zusammenhang mit Grillvorrichtungen beschriebenen Brennmaterial zu heizen. Das Brennmaterial hat wenig Rückstände.

Als lebensmittelechtes Brennmaterial ist es nahezu frei von Schadstoffen.

Im folgenden wird die Erfindung an Hand eines Ausführungsbeispiels näher erläutert.

Ein Brennmaterial für Grillvorrichtungen enthält Kokosnußschalen, Kokosbast und Kokosfleisch. Bei dem Kokosfleisch handelt es sich um die Mengen, die nach dem Genuß der Kokosnüsse an den Kokosnußschalen haften bleiben.

Die Kokosnußschalen werden zerkleinert und mit dem Kokosbast und dem Kokosfleisch zusammen gemahlen. Daraufhin wird die Mischung aus Kokosnußschalen, Kokosbast und Kokosfleisch mit Wasser getränkt. Die getränkte Mischung wird gepreßt und danach getrocknet. Daraufhin wird das anfallende Brennmaterial auf Maß geschnitten und verpackt. Es ist auch möglich, das getrocknete Brennmaterial zu Briketts zu verarbeiten.

## Patentansprüche

1. Brennmaterial für Grillvorrichtungen, in denen mittels glühenden Brennmaterials Speisen gegart werden, dadurch gekennzeichnet, daß das Brennmaterial Nußschalen enthält.

2. Brennmaterial nach Anspruch 1, bei dem als Nußschalen Kokosnußschalen vorgesehen sind.

3. Brennmaterial nach Anspruch 2, bei dem das Brennmaterial Kokosbast und/oder Kokosfleisch enthält.

4. Verfahren zur Herstellung eines Brennmaterials gemäß einem der Ansprüche 1 bis 3, bei dem Nußschalen zerkleinert, ggf. mit Kokosbast und -fleisch zusammen gemahlen, vorzugsweise mit Wasser getränkt, mit Luft durchblasen, gepreßt und getrocknet und vorzugsweise auf Maß geschnitten und verpackt wird.

5. Verfahren nach Anspruch 4, bei dem das Brennmaterial zu Briketts geformt wird.
